# EUROPÄISCHE PATENTANMELDUNG

(11) **EP 3 078 951 A1**
(43) Veröffentlichungstag der Anmeldung: **12.10.2016**
(21) Anmeldenummer: 15001020.5
(22) Anmeldetag: 10.04.2015
(51) Int. Cl.: G01J 5/04, G01J 5/02, G01J 5/00, G01J 5/08

(54) **EINRICHTUNG MIT PIR SENSOR**

(71) Anmelder: Silverlight AG, 8712 Stäfa (CH)
(72) Erfinder: Keller, Hans Jürg, 8712 Stäfa (CH); Keller, Valentin Christoph, 8404 Winterthur (CH)
(74) Vertreter: Gernet, Samuel Andreas

(57) **Zusammenfassung**

Einrichtung zur Erfassung der infraroten Eigenstrahlung von Körpern, welche ein schalenförmiges Schutzgehäuse (30) mit einer die Schutzgehäuseöffnung (35) überdeckenden Gehäuseabdeckung (40) in Form eines Fensters oder einer Linse und einen innerhalb des Schutzgehäuses (30) angeordneten infrarot-empfindlichen Sensor (20) enthält. Die Gehäuseabdeckung (40) enthält eine Schutzschicht aus Polymethylpenten (PMP), Polytetrafluorethylen (PTFE), Polypropylen (PP) oder Polyester und der Sensor (20) ist für die Messung der Infrarotstrahlung ausserhalb des mittleren Wellenlängenbereichs von 8 bis 14 µm des Planck'schen Strahlungsspektrums einer infraroten Eigenstrahlung von Körpern bei Raumtemperatur bestimmt.

## Beschreibung

Die Erfindung betrifft eine Einrichtung zur Erfassung der infraroten Eigenstrahlung von Körpern gemäss dem Oberbegriff von Anspruch 1. Solche Einrichtungen werden zusammen mit entsprechenden Auswertevorrichtungen insbesondere zur Erfassung von Objekt-Bewegungen verwendet, welche auch als passiv-infrarot Bewegungsmelder bezeichnet werden.

Einrichtungen zur Erfassung der infraroten Eigenstrahlung von Körpern mit einer Temperatur nahe der Umgebungstemperatur und deren Auswertung zur Erfassung von Bewegungen sind seit längerer Zeit bekannt zur Erkennung von beispielsweise Menschen oder auch Fahrzeugen.

In diesen sogenannten passiv-infrarot Bewegungsmeldern, abgekürzt PIR Bewegungsmelder, ist ein Sensor vorgesehen und eine Optik, die mittels segmentierten Spiegeln, Linsen oder ähnlichen optischen Elementen das Sichtfeld auf eine Anzahl begrenzter Zonen konzentriert, und damit strahlende Körper, die sich in solche Zonen hinein und hinaus bewegen, am Sensor eine wechselnde Bestrahlung erzeugen und somit durch Auswertung der wechselnden Signale des Sensors die Detektion einer Bewegung ermöglichen.

Solche Einrichtungen sind beispielsweise in US 4,321,594 beschrieben und in vielfältigen Bauformen allgemein bekannt. Entsprechende Einrichtungen dienen zur Erkennung von sich bewegenden Menschen, Fahrzeugen oder anderen Objekten, um damit beispielsweise die Schaltung von Licht, Energie, Alarmen oder andern Funktionen auszulösen, und dienen insbesondere als Bewegungsmelder, um eine Beleuchtung einzuschalten, wenn sich ein Mensch im Sichtbereich einer solchen Einrichtung bewegt.

Bekanntermassen findet die Erkennung der Infrarotstrahlung eines an seiner Oberfläche etwa 25 bis 30°C oder etwa 300° Kelvin warmen Körpers eines Menschen vor einem etwa 20°C warmen Hintergrund im Spektralbereich der Planck'schen Strahlung mit einem Maximum in der Nähe von 10 Mikrometern Wellenlänge statt, im Hauptbereich der Strahlung von etwa 8 bis 14 Mikrometern.

Solche Einrichtungen benötigen ein oder mehrere strahlungsdurchlässige Gehäuseabdeckungen, um den oder die Sensoren vor Umwelteinflüssen zu schützen oder um Fenster herzustellen, die Linsen oder Fresnel-Linsen enthalten. Für den genannten Wellenlängenbereich bieten sich einerseits kristalline Materialien an wie Diamant, NaCl, CaF sowie auch Halbleiterkristalle oder amorphe Halbleitergläser, sowie der Kunststoff Polyäthylen, der aufgrund seiner einfachen Molekularstruktur im Hauptbereich des Strahlungsspektrums von 8 bis 14 Mikrometern eine gewisse Durchlässigkeit besitzt.

Die PIR Sensoren sind üblicherweise in einem Sensorgehäuse untergebracht, welches ein strahlendurchlässiges Fenster aufweist. Um die Sensoren vor Feuchtigkeit und Verunreinigungen zu schützen, ist die Verbindung zwischen Sensorgehäuse und Fenster bevorzugt luft- und feuchtigkeitsdicht ausgeführt. Aus wirtschaftlichen und technischen Gründen werden die kleinen Fenster der Sensoren in der Regel aus Germanium oder Silicium hergestellt, wobei gleichzeitig auch Interferenzschichten auf dieses Fenster aufgebracht werden, die eine optische Filterwirkung in Bezug auf die Wellenlänge hervorrufen, die auf den zentralen Teil des zu detektierenden Spektrums ausgerichtet ist.

Die Gehäuseabdeckung der Einrichtungen, die zweckmässigerweise wesentlich grösser ist als das Fenster des Sensorgehäuses, wird nur selten als Germaniumlinse oder Siliziumwafer oder dergleichen aus kristallinem Material ausgebildet, sondern üblicherweise aus Polyäthylen, wobei es sich um Folien, Platten oder Formteile handeln kann, die in vielen Fällen die Struktur von Fresnel-Linsen beinhalten, womit gegebenenfalls eine zusätzliche Optik entfallen kann.

Die Dicke dieser Gehäuseabdeckungen in der Form eines Fensters oder einer Linse aus Polyäthylen beträgt in der Regel zwischen 0.1 mm und 1.0 mm, da bei grösseren Dicken die Transmission im Bereich 8 bis 14 Mikrometern sehr stark abnimmt und auch eine hohe Streuung durch die Opazität auftritt. Dementsprechend können dickere Gehäuseabdeckungen aus Polyäthylen nur in Ausnahmefällen für Bewegungsmelder sehr geringer Reichweite und Empfindlichkeit eingesetzt werden.

Die typischen Gehäuseabdeckungen, die als Fresnel Linse oder segmentierte Fresnel-Linse ausgebildet sind, haben eine Dicke um 0.4 bis 0.5 mm und sind aus Polyäthylen gefertigt. Diese Dicke ergibt sich einerseits aus einer minimalen mechanischen Stabilität sowie der Möglichkeit, die Rillen oder Rillenprofile der Fresnel-Linsen durch Spritzguss oder Pressverfahren realisieren zu können. Andererseits versucht man durch eine Begrenzung der Dicke noch eine genügende Infrarotdurchlässigkeit zu erhalten, die im zentralen Wellenlängenbereich von 8 bis 10 Mikrometern bei einer Dicke von 0.5 mm bereits unter 30% sinkt.

Andere vorbekannte Ausführungen verwenden halbkugelige oder gewölbte Linsenanordnungen, wie dies beispielsweise in US 4,930,864 dargestellt ist. Solche Linsenanordnungen können mehrere Linsen auf einer gewölbten Oberfläche enthalten, wobei die Linsen als gewöhnliche bikonvexe Linsen oder als Fresnellinsen oder Teile davon ausgeführt sein können.

Die Verwendung von infrarotdurchlässigen Gehäuseabdeckungen in Form von Fenstern aus Polyäthylen ist beispielsweise in US 4'795'908 oder EP-A-0440112 beschrieben.

Da Polyäthylen ein sehr weicher Kunststoff ist, führt dies dazu, dass so dünne Gehäuseabdeckungen in Form von Fenstern oder Linsen eine sehr geringe mechanische Festigkeit aufweisen, was sich insbesondere bei Bewegungsmeldern, die als Lichtschalter oder Komfortsteuerungen eingesetzt werden und sich daher oft im Handbereich von Menschen befinden, als sehr nachteilig erweist, da sie oft mutwillig oder unabsichtlich zerstört werden. Zudem neigt eine solche dünne Platte oder Linse als Gehäuseabdeckung bei grösseren Flächen von 10 oder mehr cm², wie dies zur Erreichung grösserer Reichweiten der Bewegungserkennung notwendig ist, zu wellen- oder beulenartigen Verformungen, was ästhetisch unbefriedigend ist. PIR Bewegungsmelder lassen sich daher fast immer aufgrund der Polyäthylen-Fenster oder -Linsen als solche erkennen und es gelingt nur in Ausnahmefällen mit grossem Aufwand, ästhetisch befriedigende und unscheinbare Abdeckungen herzustellen.

Trotz intensiver Suche nach geeigneten Materialien hat man keinen Kunststoff oder ein anderes leicht zu verarbeitendes und kostengünstiges Material gefunden, dass im Bereich 8 bis 14 Mikrometern eine brauchbare Transmission aufweist. Dies aus dem bekannten Grund, dass sehr viele Molekularabsorptionsfrequenzen insbesondere von organischen Verbindungen in diesem Bereich liegen, und jeder Kunststoff, der eine komplexere Struktur als Polyäthylen aufweist, zwangsläufig mehr solche Absorptionsfrequenzen und damit eine geringere Transmission in diesem Bereich aufweist.

Einzig mit ganz dünnen Folien, deren Dicke in der Grössenordnung der Wellenlänge oder darunter liegt, lässt sich die Transmission im Bereich 8 bis 14 Mikrometern auch mit anderen Kunststoffen erreichen. So können beispielsweise Polyesterfolien mit einer Dicke von 4 Mikrometern hergestellt werden, die, wenn sie mechanisch eingespannt werden, eine gewisse Festigkeit erreichen. Aber auch diese Lösung befriedigt nicht da die Folien gegenüber äusseren Kräften und spitzen Objekten sehr verletzlich sind.

Deshalb sind nach 40 Jahren weltweiter Verbreitung der PIR Bewegungsmelder die Fenster und Linsen mit ganz wenigen Ausnahmen, die teure und aufwendige kristalline oder amorphe Kristalle oder Halbleiter verwenden, immer noch ausschliesslich aus Polyäthylen gefertigt.

Aufgabe vorliegenden Erfindung ist es, eine Einrichtung zur Erfassung der infraroten Eigenstrahlung von Körpern, insbesondere einen Bewegungsmelder, zur Detektion der Planck'schen Strahlung bereit zu stellen, welche vorbeschriebene Nachteile hinsichtlich der Gehäuseabdeckung behebt. Insbesondere soll die Gehäuseabdeckung eine hohe mechanische Festigkeit aufweisen und kostengünstig in Form eines Fensters oder einer Linse herstellbar sein. Aufgabe vorliegender Erfindung ist insbesondere, eine Einrichtung zur Erfassung der infraroten Eigenstrahlung von Körpern mit einem Maximum der Eigenstrahlung im Wellenlängenbereich zwischen 7 und 10 µm bereit zu stellen, welche eine Gehäuseabdeckung in Form eines Fensters oder einer Linse aufweist, die aus einem ausreichend stabilen und dicken Kunststoff gefertigt ist, und dessen Empfindlichkeit den bisherigen Bewegungsmeldern nicht nachsteht.

Erfindungsgemäss wird die Aufgabe mit einer Einrichtung gemäss Anspruch 1 gelöst. Bevorzugte Ausführungsformen werden in den abhängigen Ansprüchen beschrieben.

Die Lösung der erfindungsgemässen Aufgabe führt zu einer Gehäuseabdeckung in Form eines Fensters oder einer Linse aus einem Kunststoff, der überwiegend oder ausschliesslich ausserhalb des zentralen Spektrums einer infraroten Eigenstrahlung von Körpern bei Raumtemperatur mit einer Wellenlänge von 8 bis 14 Mikrometern strahlungsdurchlässig ist.

Polymethylpenten weist beispielsweise bei 5 Mikrometern, bei 15 und über 25 Mikrometern Transmissionsbanden auf, die auch bei grösseren Dicken der Gehäuseabdeckung von 1 oder 2 Millimetern, wie sie für stabile Kunststoffteile zweckmässig sind, noch zu einer hohen Transmissionbei diesen Wellenlängen führt.

Dabei wird in Kauf genommen, dass diese Kunststoffe im zentralen Bereich des Spektrums einer infraroten Eigenstrahlung von Körpern bei Raumtemperatur von 8 bis 14 Mikrometern praktisch keine Transmission besitzen und damit dieser zentrale Teil der Strahlungsenergie nicht ausnützt werden kann. Andererseits besitzt die Planck'sche Strahlung auch geringe Anteile weit ausserhalb des Maximums oder zentralen Bereiches, bei wesentlich kürzeren und wesentlich längeren Wellenlängen.

Zudem besitzt insbesondere Polymethylpenten in den durchlässigen Spektralbereichen eine hohe Transparenz ohne die Opazität (Trübung der Strahlung) von Polyäthylen, was dazu führt, dass die Dicke einen wesentlich geringeren Einfluss auf die Transmission hat als bei Polyäthylen.

Bevorzugt für eine solche Anordnung werden jedoch Sensoren verwendet, die von den marktüblichen Ausführungen abweichen und nicht die üblichen, auf das zentrale Spektrum abgestimmten Filter von beispielsweise 8 bis 14 µm verwenden, sondern Filter oder Fenster, die bevorzugt nur Strahlung zwischen 3.5 und 6 µm oder oberhalb von 12.5 µm durchlassen oder beides, wobei die Durchlässigkeit im zentralen Bereich zwischen 8 und 12 Mikrometern auch Null sein darf.

Wird die erfassbare Energie des zu detektierenden Signales aufsummiert, so kommt die Lösung gemäss der Erfindung trotz Vernachlässigung des zentralen Spektralanteiles aufgrund der vorteilhaften Transmissionseigenschaften verschiedener Kunststoffe für die weit ausserhalb gelegenen Spektralanteile auf eine ebenso brauchbare Signalstärke wie die bisherigen Ausführungen.

Damit lassen sich PIR Bewegungsmelder herstellen mit mechanisch stabilen und widerstandsfähigen Abdeckungen oder Linsen, die bis 2 mm dick oder noch dicker sein können, was gegenüber den bisherigen dünnen und weichen Polyäthylen-Linsen oder -Fenstern zu einer wesentlichen Verbesserung der Robustheit und der Ästhetik führt.

Durch die erfindungsgemässe Anordnung wird es auch möglich, ganze Deckel oder Lampenabdeckungen von solchen als Lichtschalter verwendeten Bewegungsmeldern mit eingearbeiteten Linsen oder Fenstern zu versehen, wodurch sich konstruktiv einfache und ästhetisch vorteilhafte Lösungen realisieren lassen.

Die in die Gehäuseabdeckung eingearbeiteten Linsen oder Fresellinsen können in die Gehäuseabdeckung eingeprägte Strukturen sein, wobei eine Gehäuseabdeckung üblicherweise eine Vielzahl solcher Linsen oder Fresnellinsen enthält.

Die Gehäuseabdeckung kann jedoch auch ein einfaches Fenster darstellen, insbesondere wenn zur Erzeugung von besonderen Empfindlichkeitszonen ein Segmentspiegel als zusätzliches optisches Element eingesetzt wird. Ein Segmentspiegel besteht zweckmässigerweise aus einer Vielzahl parabolischer Spiegelstücke, wobei jedes Spiegelstück die Infrarotstrahlung in eine andere Richtung fokussiert. Ein solch einfaches Fenster kann plan oder gewölbt ausgebildet sein, hat jedoch üblicherweise keine optisch bündelnde Wirkung.

Für als Einbruchsicherung verwendete Bewegungsmelder ist es von Vorteil, dass sich mechanisch vandalensichere Ausführungen herstellen lassen, bei denen nicht wie bei der Verwendung von Polyäthylen die Funktion mit einfachen Mitteln durch zerstechen oder zerschneiden der Linse oder Abdeckung sabotiert werden kann, und die unauffällig sind und vom Einbrecher gar nicht als solche wahrgenommen werden.

Die Gehäuseabdeckung besteht bevorzugt aus einer Folie, einer Platte oder einem Formkörper aus Polymethylpenten (PMP), Polytetrafluorethylen (PTFE), Polypropylen (PP) oder Polyester.

Weiter bevorzugt besteht die Gehäuseabdeckung aus einer Folie, einer Platte oder einem Formkörper aus einem Verbundwerkstoff oder einem Laminat enthaltend eine Schicht aus Polymethylpenten (PMP), Polytetrafluorethylen (PTFE), Polypropylen (PP) oder Polyester.

Bevorzugt wird weiterhin eine Gehäuseabdeckung, welche aus einer Vielzahl von flachen, zylindrischen oder gewölbten Fresnellinsen oder einer Einzellinse aufgebaut ist oder solche Linsen enthält. Dabei können die Fresnellinsen oder die Einzellinse als in die Gehäuseabdeckung eingeprägte Elemente ausgebildet sein. Die Fresnellinsen oder die Einzellinse können jedoch auch als in die Gehäuseabdeckung eingepresste Elemente aus Polymethylpenten (PMP), Polytetrafluorethylen (PTFE), Polypropylen (PP) oder Polyester ausgebildet sein.

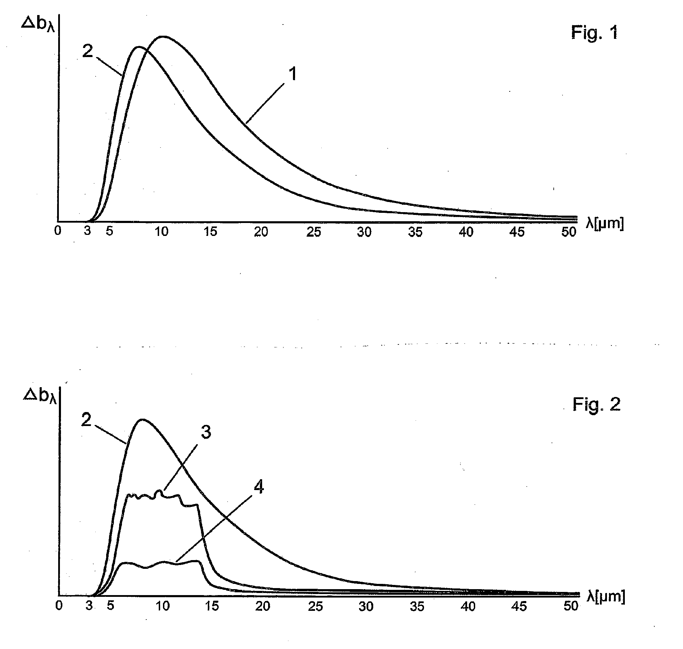

Weitere Vorteile, Merkmale und Einzelheiten der Erfindung ergeben sich aus der nachfolgenden Beschreibung der Zeichnungen; diese zeigen in
- Fig.1:: schematisch das Planck'sche Strahlungsspektrum der Wärmestrahlung, die ein Körper mit etwa Raumtemperatur von 20 Grad Celsius ausstrahlt, sowie eine beispielhafte Darstellung des Wellenlängen-abhängigen Strahlungskontrastes als Differenz der Planck'schen Strahlung zwischen einem Objekt und dessen Umgebungstemperatur;
- Fig.2:: eine schematische Darstellung eines Wellenlängen-abhängigen Strahlungskontrastes als Differenz der Planck'schen Strahlung zwischen einem Objekt und dessen Umgebungstemperatur, die Durchlasskurve eines für Infrarot-sensitive Bewegungsmelder verwendeten typischen optischen Bandpass-Filters und das daraus resultierende Energiespektrum der durch das Filter durchgelassenen Infrarotstrahlung;

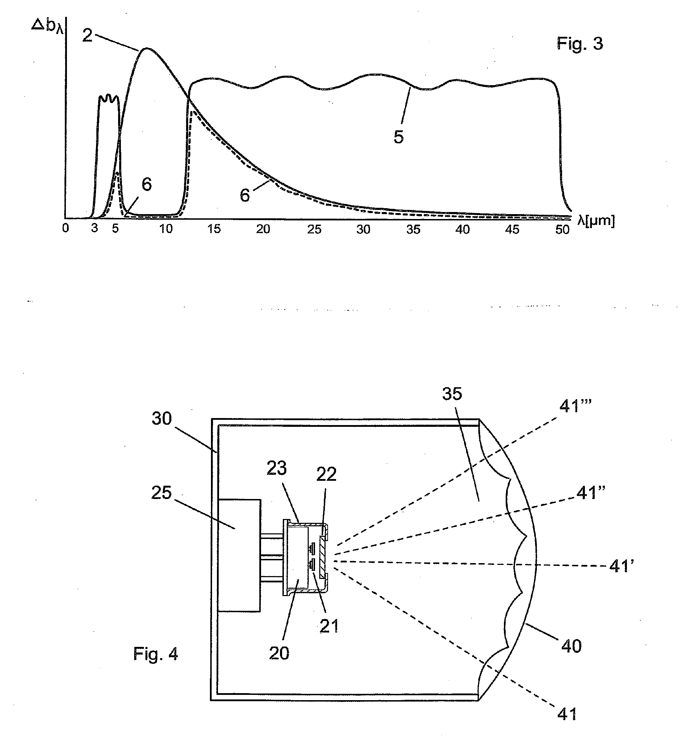

- Fig.3:: eine schematische Darstellung eines Wellenlängen-abhängigen Strahlungskontrastes als Differenz der Planck'schen Strahlung zwischen einem Objekt und dessen Umgebungstemperatur, die Durchlässigkeit eines optischen Filters für eine erfindungsgemässe Einrichtung und das daraus resultierende Energiespektrum der durch das Filter durchgelassenen Infrarotstrahlung;
- Fig.4:: einen schematischen Aufbau einer erfindungsgemässen Einrichtung.

Figur 1 zeigt die bekannte Planck'sche Strahlung (Kurve 1) die ein Körper mit etwa Raumtemperatur von 20 Grad Celsius ausstrahlt. Die Abszisse zeigt die Wellenlänge in Mikrometern λ[µm] und die Ordinate die Strahlungsintensität. PIR Bewegungsmelder detektieren das Objekt aufgrund der von der Umgebungstemperatur abweichenden Oberflächentemperatur des Objektes. Die Differenz der Planck'schen Strahlung des Objektes und seiner Umgebung aufgrund der unterschiedlichen Temperaturen ist der Strahlungskontrast Δb_{λ} (Kurve 2). Die Kurven 1 und 2 weisen eine ähnliche Form auf; jedoch ist die Kurve 2 gegenüber der Kurve 1 in Abszissenrichtung etwas gegen kürzere Wellenlängen verschoben. Die Energie des Strahlungskontrastes Δb_{λ} wird vom PIR Bewegungsmelder ausgewertet.

Figur 2 zeigt wiederum die Kurve 2 des Strahlungskontrastes Δb_{λ} sowie eine Kurve 3 entsprechend der Durchlasskurve eines typischen optischen Bandpass-Filters wie es in vorbekannten Ausführungen eingesetzt wird und für Wellenlängen von etwa 7 bis 14 Mikrometern durchlässig ist. Die Kurve 4 zeigt die verbleibende Energie wenn die Strahlung (siehe Kurve 2) das Filter 22 (siehe Kurve 3) passiert und zudem durch eine 0.5 mm dicke Abdeckung 40 aus Polyäthylen um den Faktor 3 abgeschwächt ist und somit das, was vom Sensor des PIR Bewegungsmelders in den vorbekannten Ausführungen noch aufgenommen wird.

Figur 3 zeigt die Spektrallinien einer erfindungsgemässen Einrichtung, in der auf eine Gehäuseabdeckung aus Polyäthylen verzichtet wird und stattdessen eine Gehäuseabdeckung 40 aus Polypropylen, Polytetrafluorethylen (PTFE), Polymethylpenten oder Polyester verwendet wird. Die Kurve 5 zeigt die Durchlässigkeit des verwendeten optischen Filters 22, das in dem gezeigten Beispiel Strahlung von 3.5 bis 6 Mikrometern und von 12.5 bis 50 Mikrometern durchlässt. Die punktierte Kurve 6 zeigt schliesslich die auf den Sensor 20 auftreffende Strahlung. Da die in der erfindungsgemässen Einrichtung verwendeten Kunststoffe in diesen Wellenlängen weitgehend transparent sind, tritt auch bei dicken Abdeckungen von beispielsweise 2 mm keine wesentliche zusätzliche Abschwächung auf.

Wie sich aufgrund des in den Figuren gewählten linearen Massstabes erkennen lässt, ist bei einer erfindungsgemässen Einrichtung die auf den Sensor 20 auftreffende Strahlung in der Summe von derselben Grössenordnung wie in vorbekannten Ausführungen, jedoch in anderen Wellenlängenbereichen, was bei den üblicherweise verwendeten Sensoren 20 keinerlei Probleme darstellt, wenn sie mit den geeigneten optischen Filtern 22 versehen werden.

In einer typischen Ausführung besteht ein PIR-Bewegungsmelder einer erfindungsgemässen Einrichtung aus einem in einem Sensorgehäuse 23 angeordneten Sensor 20, wobei das Sensorgehäuse 23 eine durch ein strahlungsdurchlässiges Fenster 22 geschlossene Öffnung aufweist, das Fenster 22 einen optischen Filter enthält oder daraus besteht, einem elektronischen Verstärker mit Signalauswertungseinheit 25, und einem alles umfassenden Schutzgehäuse 30 mit Gehäuseabdeckung 40, wobei die Gehäuseabdeckung 40 bevorzugt eine Einzellinse oder Fresnellinsen enthält.

Fig. 4 zeigt eine erfindungsgemässe Ausführungsform eines PIR Bewegungsmelders. PIR Sensor steht dabei für passiver Infrarot Sensor. Die in Fig. 4 gezeigte Ausführung enthält einen Sensor 20, der in einem Sensorgehäuse 23, das mit einem strahlungsdurchlässigen Fenster 22 versehen ist und mit diesem weitgehend dicht verschlossen ist und zwei Sensorelemente 21, die elektrisch differentiell geschaltet sind und aus pyroelektrischem Material bestehen. Die Einrichtung enthält weiter eine Signalauswerteeinheit 25. Zudem enthält der Sensor 20 in herkömmlicher Weise einen hochohmigen Vorverstärker (nicht gezeigt). Solche als pyroelektrische dual-differential Sensoren 20 bezeichnete Bauteile sind in grosser Zahl auf dem Markt erhältlich.

Es werden jedoch auch Sensoren 20 mit nur einem Sensorelement 21 oder mehreren und anders geformten Sensorelementen 21 hergestellt, oder Sensoren 20 die als Sensorelemente 21 Widerstandsbolometer verwenden, die aufgrund von Strahlung und der daraus resultierenden Erwärmung eine Veränderung des elektrischen Widerstandes auswerten, oder Sensorelemente 21, die als Thermoelemente ausgebildet sind und bei Erwärmung eine elektrische Spannung abgeben. Für die erfindungsgemässe Anordnung ist die Art des Infrarotsensors 20 nicht von Bedeutung, solange dieser Strahlung in einem breiten Bereich von etwa 3.5 bis 50 Mikrometern Wellenlänge detektieren kann.

Der Sensor 20 ist mit einer Signalauswerteeinheit 25 verbunden, die auf bekannte Weise ein Ausgangssignal erzeugt, wenn der Sensor 20 wechselnde Strahlung empfängt.

Die ganze Anordnung ist in ein Schutzgehäuse 30 eingebaut, in das auf der Vorderseite eine Vielzahl von Linsen 40 eingearbeitet sind, wodurch sich eine Mehrzahl von diskreten Richtungen 41, 41', 41", 41"' ergeben, aus der die Anordnung Strahlung empfängt.

Aufgrund der Verwendung eines Filters 22, das insbesondere im obersten und untersten Teil des Spektralbereiches durchlässig ist, kann für die Linse 40 ein mechanisch stabiler Kunststoff wie Polypropylen oder Polymethylpenten mit einer Dicke bis zu einigen Millimetern verwendet werden.

Die erfindungsgemässe Ausführung eines solchen PIR Bewegungsmelders beschränkt sich nicht auf den in Fig. 4 gezeigten Aufbau. Es können alle bekannten Ausführungen mit flachen, zylindrischen oder gewölbten Fresnellinsen, Einzellinsen und dergleichen verwendet werden, oder Segmentspiegel und andere Spiegelanordnungen.

## Patentansprüche

1. Einrichtung zur Erfassung der infraroten Eigenstrahlung von Körpern enthaltend ein schalenförmiges Schutzgehäuse (30) mit einer die Schutzgehäuseöffnung (35) überdeckenden Gehäuseabdeckung (40) in Form eines Fensters oder einer Linse und ein innerhalb des Schutzgehäuses (30) angeordneter infrarot-empfindlicher Sensor (20),
**dadurch gekennzeichnet, dass**
die Gehäuseabdeckung (40) eine Schutzschicht aus Polymethylpenten (PMP), Polytetrafluorethylen (PTFE), Polypropylen (PP) oder Polyester enthält und der Sensor (20) für die Messung der Infrarotstrahlung ausserhalb des mittleren Wellenlängenbereichs von 8 bis 14 µm des Planck'schen Strahlungsspektrums einer infraroten Eigenstrahlung von Körpern bei Raumtemperatur bestimmt ist.

2. Einrichtung nach Anspruch 1, **dadurch gekennzeichnet, dass** die Gehäuseabdeckung (40) aus der Schutzschicht besteht.

3. Einrichtung nach Anspruch 1, **dadurch gekennzeichnet, dass** die Schutzschicht Teil eines Laminates oder eines Verbundwerkstoffes ist.

4. Einrichtung nach Anspruch 1, **dadurch gekennzeichnet, dass** das Polyester ein Polyethylen-Terephthalat (PET) ist.

5. Einrichtung nach Anspruch 1, **dadurch gekennzeichnet, dass** die Gehäuseabdeckung (40) eine Folie, Platte oder ein Formteil ist.

6. Einrichtung nach Anspruch 1, **dadurch gekennzeichnet, dass** die Gehäuseabdeckung (40) flache, zylindrische oder gewölbte Fresnellinsen oder eine Einzellinse enthält.

7. Einrichtung nach Anspruch 6, **dadurch gekennzeichnet, dass** die Fresnellinsen oder Einzellinsen in die Gehäuseabdeckung (40) eingeprägte Elemente sind.

8. Einrichtung nach Anspruch 1, **dadurch gekennzeichnet, dass** die Fresnellinsen oder Einzellinsen in die Gehäuseabdeckung (40) eingepresste Elemente aus Polymethylpenten (PMP), Polytetrafluorethylen (PTFE), Polypropylen (PP) oder Polyester sind.

9. Einrichtung nach Anspruch 1, **dadurch gekennzeichnet, dass** zur Erzeugung von besonderen Empfindlichkeitszonen zur Erfassung der infraroten Eigenstrahlung von Körpern die Einrichtung einen zwischen Gehäuseabdeckung (40) und Sensor (20) angeordneten Segmentspiegel als zusätzliches optisches Element aufweist, wobei der Segmentspiegel eine Vielzahl parabolischer Spiegelstücke enthält.

10. Einrichtung nach Anspruch 1, **dadurch gekennzeichnet, dass** die Gehäuseabdeckung (40) eine Dicke zwischen 0.5 mm und 3 mm, insbesondere zwischen 0.8 mm und 2 mm, aufweist.

11. Einrichtung nach Anspruch 1, **dadurch gekennzeichnet dass** zwischen der Gehäuseabdeckung (40) und dem Sensor (20) ein optisches Filter (22) vorhanden ist.

12. Einrichtung nach Anspruch 11, **dadurch gekennzeichnet, dass** der optische Filter (22) für Infrarotstrahlung im mittleren Wellenlängenbereich des Planck'schen Strahlungsspektrums einer infraroten Eigenstrahlung von Körpern bei Raumtemperatur in einem Wellenlängenbereich zwischen 8 und 14 µm nicht durchlässig ist.

13. Einrichtung nach Anspruch 11, **dadurch gekennzeichnet, dass** das optische Filter (22) für Wellenlängen von 3.5 bis 6 µm transparent ist.

14. Einrichtung nach Anspruch 11, **dadurch gekennzeichnet, dass** das optische Filter (22) für Wellenlängen zwischen 12.5 und 25 µm transparent ist.

15. Einrichtung nach Anspruch 1, **dadurch gekennzeichnet, dass** der Sensor (20) ein oder mehrere Sensorelemente (21) aufweist.

16. Einrichtung nach Anspruch 1, **dadurch gekennzeichnet, dass** der Sensor (20) ein pyroelektrischer Sensor ist mit mindestens zwei differenziell geschalteten Elementen (21).

17. Verwendung der Einrichtung nach einem der Ansprüche 1 bis 16 als PIR Bewegungsmelder.
